# EUROPEAN PATENT APPLICATION

(11) **EP 4 684 941 A1**
(43) Date of publication of application: **28.01.2026**
(21) Application number: 24775178.7
(22) Date of filing: 20.03.2024
(51) Int. Cl.: B29C 64/112, B29C 64/386, B29C 64/236, B29C 64/241, B29C 64/30, G06T 17/00, B33Y 30/00, B33Y 40/20, B33Y 80/00, B33Y 10/00

(54) **METHOD FOR MANUFACTURING SUBMICRON FLUIDIC CHANNEL AND SUBMICRON FLUIDIC CHANNEL MANUFACTURED THEREBY**

(30) Priority: 21.03.2023 KR 20230036977; 19.03.2024 KR 20240038087
(71) Applicant: Seoul National University R&DB Foundation, Seoul 08826 (KR)
(72) Inventor: KIM, Sung Jae, Seoul 06279 (KR); HONG, Seong Jun, Seongnam-si, Gyeonggi-do 13519 (KR); KWAK, Sung Yeol, Seoul 08730 (KR); HA, Sungjae, Seongnam-si, Gyeonggi-do 13602 (KR)
(74) Representative: Marks & Clerk LLP
(86) International application number: PCT/KR2024/003459
(87) International publication number: WO 2024/196130

(57) **Abstract**

The present invention relates to a method for manufacturing a submicron fluidic channel by using a 3D printer, and a submicron fluidic channel manufactured thereby. The method for manufacturing a submicron fluidic channel comprises the steps of: (a) modeling a 3D model including micropores; (b) adjusting the output direction of the minimum diameter of the micropores to be in the layer thickness direction of a 3D printer, to print the 3D model; and (c) forming a fluidic channel of a submicron size by applying predetermined heat and pressure to the printed output, wherein step (c) is a step in which a fluidic channel is formed through tight contact of two points forming the minimum diameter of the pores implemented in the printed output.

## Description

### TECHNICAL FIELD

The present invention relates to a method of fabricating submicron fluidic channels using a three-dimensional (3D) printer, and submicron fluidic channels fabricated using the method, and more particularly, to a method of fabricating submicron fluidic channels, the method being capable of obtaining higher resolution in consideration of the printing method of a 3D printer, and submicron fluidic channels fabricated using the method.

### BACKGROUND ART

In general, technologies for fabricating nanofluidic diodes that control current within fluidic channels are being actively studied in the fields of bio and energy, e.g., bio-sensing, switching devices, and energy harvesting.

Typically, nanofluidic diodes within fluidic channels have been fabricated through photolithography. However, photolithography needs to be performed in a high-class cleanroom, requires equipment such as a photo aligner, wet station, and spin coater, and involves a highly complex process.

Various alternatives have been studied to overcome the complexity of photolithography, among which fabrication using a three-dimensional (3D) printer is the most widely used. However, although nano-sized objects need to be printed to fabricate nanostructures, commercial 3D printers have a resolution of tens of *µ*m and a stably printable resolution of only hundreds of µm, making it difficult to fabricate nanostructures.

### DETAILED DESCRIPTION OF THE INVENTION

### TECHNICAL PROBLEM

The present invention provides a method of easily fabricating submicron fluidic channels using a commercial three-dimensional (3D) printer.

### TECHNICAL SOLUTION

According to an aspect of the present invention, there is provided a method of fabricating submicron fluidic channels using a three-dimensional (3D) printer, the method including (a) creating a 3D model including micropores, (b) printing the 3D model by adjusting a print orientation of a minimum diameter of the micropores to align with a layer thickness direction of the 3D printer, and (c) forming submicron-sized fluidic channels by applying predetermined heat and pressure to the printed object, wherein step (c) includes forming fluidic channels by bringing two points, which form a minimum diameter of pores implemented in the printed object, into close contact with each other.

Step (c) may include bringing the two points into close contact by applying the pressure in directions facing each other toward the two points.

The 3D printer may have an xy resolution greater than the layer thickness.

The minimum diameter of pores implemented in the printed object may be smaller than the xy resolution.

The layer thickness may correspond to a z-axis diameter of pores implemented in the printed object.

The printed object may be held at room temperature for a predetermined period of time while the pressure is being applied, after step (c).

Step (b) may include rotating the 3D model around a combination of x- and y-axes.

The 3D model may be rotated 90° or less.

In step (b), when the 3D model is rotated 90° around the x-axis, a minimum y-axis diameter of the micropores may correspond to the layer thickness.

In step (b), when the 3D model is rotated 90° around the y-axis, a minimum x-axis diameter of the micropores may correspond to the layer thickness.

The 3D printer may use multijet printing (MJP).

According to an aspect of the present invention, there are provided submicron fluidic channels fabricated using the above-described method, including submicron-sized fluidic channels, and satisfying a maximum diameter less than 1 µm.

The submicron fluidic channels may satisfy a minimum diameter of 1 nm or more.

### ADVANTAGEOUS EFFECTS

According to the present invention, submicron fluidic channels may be easily fabricated using a commercial 3D printer rather than a typical complex and high-cost photolithography process.

In addition, a high-resolution printed object may be obtained and then deformed into submicron-sized channels.

### DESCRIPTION OF THE DRAWINGS

FIG. 1 is a flowchart of a method of fabricating submicron fluidic channels, according to an embodiment of the present invention.
FIG. 2 is a diagram showing an example of adjusting a print orientation by rotating a three-dimensional (3D) model, according to an embodiment of the present invention.
(A) of FIG. 3 is a conceptual view showing the deformation of submicron fluidic channels according to an embodiment of the present invention, and (b) of FIG. 3 is a microscopic image showing actual deformation.
FIG. 4 is a schematic view for describing a method of fabricating submicron fluidic channels, according to an embodiment of the present invention.
FIG. 5 is a microscopic image showing the layer thickness of an object printed without rotation of a 3D model, according to an embodiment of the present invention.
FIGS. 6 and 7 include microscopic images of pores implemented in objects printed using a 3D printer, according to an embodiment of the present invention.
FIG. 8 includes microscopic images of submicron fluidic channels fabricated using a method of fabricating submicron fluidic channels, according to an embodiment of the present invention.
FIG. 9 includes scanning electron microscopic (SEM) images of submicron fluidic channels before deformation (a) and after deformation (b).
FIG. 10 shows test results for determining whether submicron fluidic channels fabricated according to an embodiment of the present invention are formed.
FIG. 11 is a graph showing a pore size calculated by measuring an electrical resistance of nanopores of submicron fluidic channels fabricated according to an embodiment of the present invention.

### MODE OF THE INVENTION

Hereinafter, the present invention will be described in detail by explaining embodiments of the invention with reference to the attached drawings. The invention may, however, be embodied in many different forms and should not be construed as being limited to the embodiments set forth herein; rather, these embodiments are provided so that this disclosure will be thorough and complete, and will fully convey the concept of the invention to one of ordinary skill in the art. In the drawings, the thicknesses or sizes of layers are exaggerated for clarity and convenience of explanation.

As used herein, a 'three-dimensional (3D) printer' is a device that receives a 3D model as input and outputs a 3D object (or printed object) from the model. Unless otherwise specified, a '3D model' refers to 'a model used for a 3D printer' or 'a model created for 3D printing'. '3D modeling' refers to a process of creating a 3D model (or shape), and a 3D shape may be created using a 3D photo booth, two-dimensional (2D) photos, other design drawings, or the like.

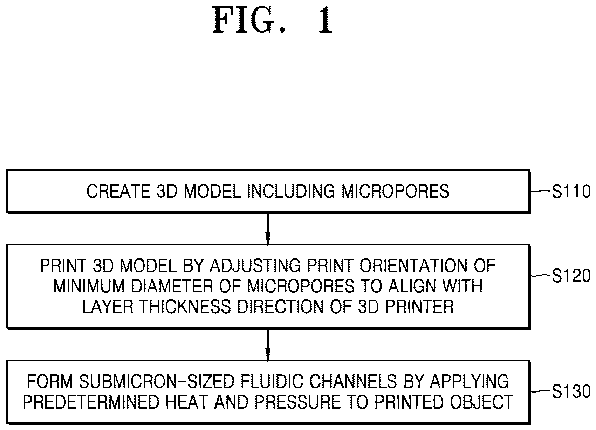

FIG. 1 is a flowchart of a method of fabricating submicron fluidic channels using a 3D printer, according to an embodiment of the present invention.

Referring to FIG. 1, initially, a 3D model including micropores is created (S110).

The submicron fluidic channels according to an embodiment of the present invention are fluidic channels with a maximum diameter of less than 1 µm, and may be obtained by deforming pores that are tens to hundreds of micrometers in size. To this end, a 3D model including micropores serving as preliminary channels is created. The micropores may have various shapes, such as rectangular or oval, and be designed with various numbers and structures depending on the purpose of fluidic channels.

A smaller diameter of the micropores indicates a narrower cross-sectional width of the micropores. The narrower the cross-sectional width of the micropores, the more easily submicron-sized channels are fabricated by deforming the pores.

The printer resolution is expressed as the layer thickness and xy resolution measured in dots per inch (dpi) or micrometers (µm). The diameter of the micropores may be determined based on the xy resolution of the 3D printer. More specifically, the x-axis resolution refers to the minimum unit by which the printer may move left and right, while the y-axis resolution refers to the minimum unit by which the printer may move forward and backward. A smaller minimum unit indicates higher resolution. The higher the resolution, the smaller the diameter of the micropores.

Commercial 3D printers print objects by stacking resin layer by layer in the z-axis direction, and each individual layer may be simply called a layer. The z-axis resolution refers to the minimum unit of height when the printer stacks layers. Generally, the xy resolution in one layer is hundreds of µm, while the thickness of one layer is tens of µm less than about 100 µm (250 dpi). It means that the xy resolution is greater than the layer thickness. In other words, the resolution in the z-axis direction (the direction in which layers are stacked) is higher.

Therefore, the 3D model is printed by adjusting the print orientation of the minimum diameter of the micropores to align with the layer thickness direction of the 3D printer (S120).

When the print orientation of the minimum diameter of the micropores is adjusted to align with the layer thickness direction of the 3D printer by rotating the 3D model around the x- or y-axis, the minimum printing unit may become smaller compared to when the model is not rotated, and thus a smaller diameter of the micropores may be achieved. As such, the minimum diameter of pores implemented in the printed object may be smaller than the xy resolution of the 3D printer.

When the height direction of the 3D model is defined as the z-axis direction, the 3D model is rotated around a combination of the x- and y-axes. Herein, rotation around 'a combination of the x- and y-axes' includes (i) rotation around only the x-axis, (ii) rotation around only the y-axis, or (iii) rotation around both the x- and y-axes. Meanwhile, rotation around the z axis only changes the front-back and left-right (x-y) orientation of the desired shape without affecting resolution and thus is not considered in the present invention.

In an embodiment of the present invention, by rotating the desired shape around a combination of the x- and y-axes to increase resolution, the minimum diameter of pores implemented in the printed object may be smaller than the xy resolution of the 3D printer. In this case, the layer thickness corresponds to the z-axis diameter of pores implemented in the printed object. As such, the minimum x-axis and y-axis diameters of the micropores may become different from each other by aligning the minimum x-axis or y-axis diameter with the layer thickness.

**For** example, assuming that the xy resolution of the 3D printer is 100 µm and the layer thickness is 30 µm, when the micropores are designed with a width (x-axis) and height (y-axis) of 30 µm × 30 µm, the printed object is as follows. When the 3D model is printed in the original print orientation without rotation, the pore size is smaller than the xy resolution of the printer and thus the pore size of 30 µm × 30 µm is not achieved. However, when the print orientation is adjusted, a smaller pore size may be achieved. In this case, unlike the original pore design, the printed object has a pore size of about 30 µm × 100 µm depending on the resolution. This is because the layer thickness (z-axis resolution) is 30 µm and the xy-axis resolution is 100 µm.

In summary, because the 3D printer has an X-axis and Y-axis resolution of 100 µm or more, but a Z-axis resolution as small as 30 µm, it enables achieving a pore size much smaller than the XY resolution.

The rotation angle may include 0°. In this case, the 3D model is created in its original default orientation. Even when the rotation angle is 0°, the size of the micropores may be adjusted within the xy resolution range of the 3D printer, and the minimum x-axis and y-axis diameters may be adjusted to be different from each other.

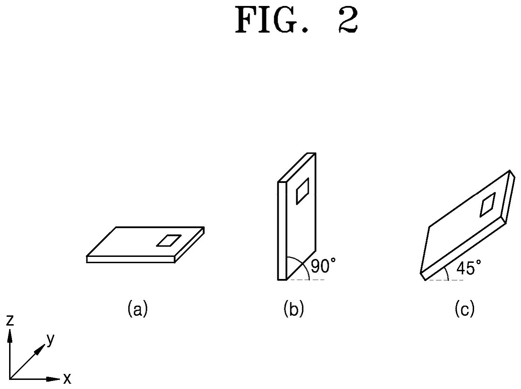

FIG. 2 is a diagram showing an example of adjusting the print orientation by rotating the 3D model, according to an embodiment of the present invention.

In FIG. 2, (a) shows the desired shape printed without rotation, (b) shows the desired shape printed after being rotated 90° around the y-axis, and (c) shows the desired shape printed after being rotated 45° around the y-axis.

(A) to (c) of FIG. 2 all include rectangular column-shaped micropores A, and the size of the micropores A is determined based on the x-axis and y-axis diameters. The size of the micropores A may differ in (a) to (c) depending on whether the shape is rotated.

In (a) of FIG. 2, x-axis and y-axis diameters a and b are determined based on the xy resolution of the 3D printer. More specifically, a may be determined based on the x-axis resolution, and b may be determined based on the y-axis resolution. Therefore, the diameters a and b of the micropores A are hundreds of µm.

In (b) of FIG. 2, a z-axis diameter c corresponding to the layer thickness is tens of µm. That is, because the shape in (a) of FIG. 2 is rotated 90° and then printed in the direction in which layers are stacked (the z-axis direction), when it is adjusted whether to print a layer, the z-axis diameter c becomes the same as the layer thickness. Meanwhile, the y-axis diameter b is determined based on the resolution, i.e., the y-axis resolution, of the 3D printer, and thus is hundreds of µm as in (a) of FIG. 2.

When the shape is rotated back to its original position after 3D printing according to (b) of FIG. 2, the z-axis diameter c serves as an x-axis diameter. This diameter has a different value from the x-axis diameter a in (a) of FIG. 2. That is, an x-axis diameter smaller than the diameter a in (a) of FIG. 2 is achieved. As another embodiment, when the desired shape is rotated 90° around the x-axis, the z-axis diameter c serves as a y-axis diameter according to the same principle.

In (c) of FIG. 2, the shape in (a) of FIG. 2 is rotated 45° and then printed. A diameter d depends on the resolution and layer thickness of the 3D printer and thus has a value between a and c. Meanwhile, the y-axis diameter b is determined based on the resolution of the 3D printer, and thus is hundreds of µm like the diameter b in (a) of FIG. 2. When the shape is rotated back to its original position after 3D printing, the diameter d serves as an x-axis diameter of the micropores A.

As described above, the diameters a, c, and d are different from each other and thus the sizes of the micropores A are also different from each other in FIG. 2. In the above example, even when printing is performed at an acute angle less than 90° as in (c) of FIG. 2, micropores of tens to hundreds of µm in size may be obtained. The size of the micropores may vary depending on the resin jetting angle and the curing method of the printer. This demonstrates that micropores of a different size may be obtained depending on the rotation angle of the shape during 3D modeling, and that a high-resolution object may be obtained by adjusting the minimum-scale print orientation of the object to be printed to align with the z-axis direction (the direction in which layers are stacked).

In an embodiment, the 3D printer may be a device based on an inkjet-based method such as multijet printing (MJP) or colorjet printing. The MJP method, also known as multijet modeling (MJM), is a layering method that cures photopolymer resin and casting wax with ultraviolet (UV) light. Material is jetted from the printer head and simultaneously cured with UV light to form one layer at a time, thereby achieving fast printing speed and high surface precision. Because a model material and a support material are dispensed from different nozzles, the support may be easily removed during post-processing and thus the formation of a variety of shapes may be enabled.

Submicron-sized fluidic channels are formed by applying heat and pressure to the printed object for a certain period of time (S130).

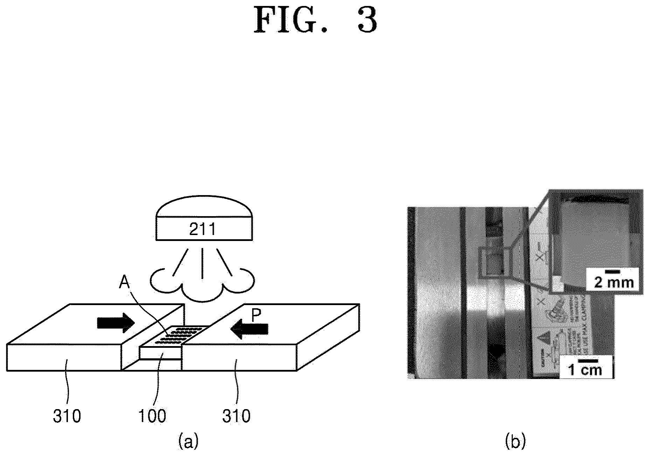

(A) of FIG. 3 is a conceptual view showing the deformation of a printed object 100 including micropores A, according to an embodiment of the present invention, and (b) of FIG. 3 is a microscopic image showing actual deformation.

Referring to FIG. 3, as shown in (a), heat may be applied to a mesh with micropores A using a vise 310 and a heater 211. The heater 211 may use, for example, a steam iron. (B) of FIG. 3 shows the formation of submicron fluidic channels caused by the deformation of the mesh within the vise 310.

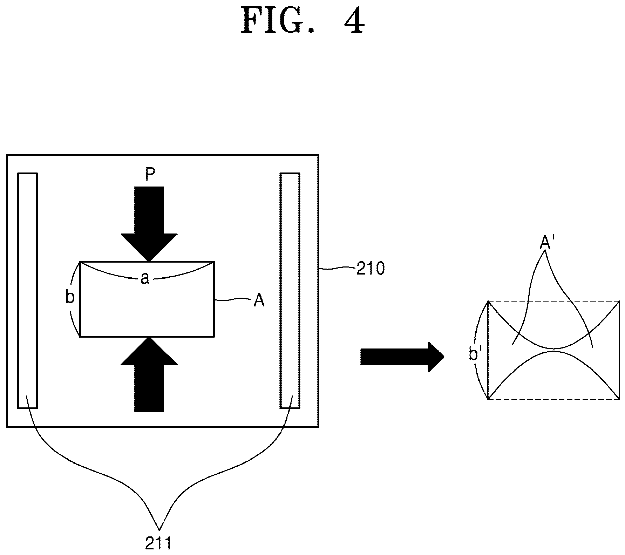

FIG. 4 is a schematic view for describing a method of fabricating submicron fluidic channels, according to an embodiment of the present invention.

Referring to FIG. 4, the deformation of the micropores A of the printed object is shown. When the printed object including the micropores A with different x-axis and y-axis diameters a and b is heated and pressed, the micropores A are deformed. For example, the printed object may be pressed under a predetermined pressure P within a heat treatment device 210 including the heater 211. As such, both ends of the diameter b come into close contact with each other at the center of the micropores A, thereby forming submicron fluidic channels A'.

A one-direction diameter b' of the submicron fluidic channels A' is shorter than the original diameters a and b of the micropores A and may be, for example, less than 1 µm (and greater than 0 µm). Alternatively, the micropores A may have a diameter ranging from 1 nm to less than 1 µm. This is because the resin of the 3D printer may be deformed by heat. The pore size of the deformed printed object may be reduced to the nanoscale, thereby obtaining the submicron fluidic channels A'.

Because the resin of the 3D printer may be deformed by heat, when heat and pressure are applied to the printed object to cause deformation, channels with a size smaller than the size of the originally printed channels may be obtained. Assuming that the xy resolution of the 3D printer is 100 µm and the layer thickness is 30 µm as in the above-described example, even when pores with a size of 30 µm × 100 µm are printed, deformation by heat and pressure may result in pores with a size of 30 µm × 30 µm as originally designed.

The heat treatment may be performed at a temperature capable of melting and deforming the resin, e.g., at 100°C or higher. The heat treatment device 210 is not limited to a particular type or structure and may be integrally configured with the heater 211.

The pressure P may be applied in a direction parallel to the formation direction of the diameter b which is shorter than the diameter a. As such, both ends forming the diameter b come into close contact. FIG. 4 shows rectangular pores and thus a and b correspond to horizontal and vertical diameters, respectively. However, when the pore shape is irregular, the horizontal and vertical diameters may differ per region. In this case, a and b refer to the minimum x-axis and y-axis diameters, respectively. Preferably, the pressure P may be applied in a direction parallel to the formation direction of the shorter diameter among the minimum x-axis and y-axis diameters. More preferably, the pressure is applied at positions corresponding to both ends of the diameter to bring the ends into close contact with each other.

As another embodiment, to be pressed in a direction parallel to the formation direction of the diameter a, a higher pressure may be required to bring both ends forming the diameter a into close contact.

When the printed object is compressed by pressure, the micropores decrease in width, height, and thickness. When the printed object deformed by applying heat and pressure is held at room temperature for a certain period of time while maintaining the pressure, the printed object may stay deformed without returning to its original form.

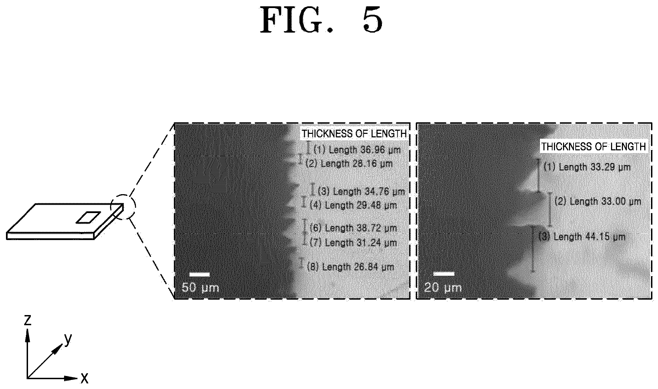

FIG. 5 is a microscopic image showing the layer thickness of the object printed without rotation of the shape, according to an embodiment of the present invention.

In FIG. 5, the thickness of one layer corresponds to about 26 µm to 44 µm. This shows that the z-axis resolution is tens of µm.

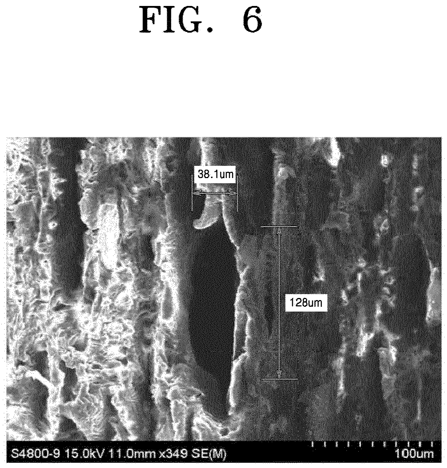

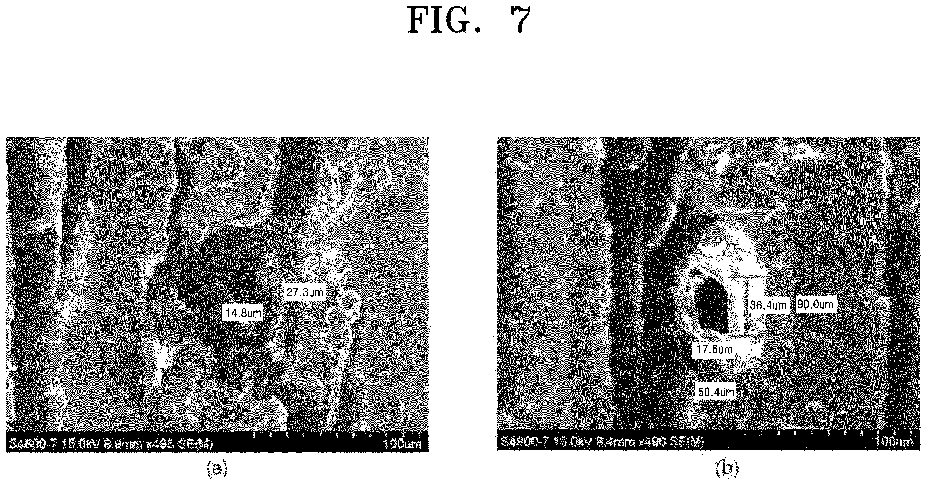

FIGS. 6 and 7 include microscopic images of objects printed using a 3D printer, according to an embodiment of the present invention. Specifically, FIG. 6 shows a 3D model printed by rotating the desired shape 90° about the y-axis, and FIG. 7 shows a 3D model printed by rotating the desired shape 45° about the y-axis.

The scanning electron microscopic (SEM) image of FIG. 6 shows that the y-axis diameter of the micropores is 128 µm, while the x-axis diameter thereof is shorter at 38.1 µm. This shows that, by adjusting the original print orientation of the 3D printer, higher resolution may be obtained, and the typical resolution of hundreds of micrometers may be stably reduced to tens of micrometers.

The SEM image of (a) of FIG. 7 shows that the y-axis diameter of the micropores is 27.3 µm, while the x-axis diameter thereof is shorter at 14.8 µm. In addition, the SEM image of (b) of FIG. 7 shows that the y-axis diameter of the micropores is 36.4 µm, while the x-axis diameter thereof is shorter at 17.6 µm.

The images of FIGS. 6 and 7 show that, when the shape is tilted by 45° around the y-axis before printing, the overall pore size becomes smaller. This takes advantage of the different effectiveness and extent of pore formation depending on the resin injection angle of the 3D printer, and demonstrates that smaller pores are formed when the shape is tilted by 45°.

The embodiments of FIGS. 6 and 7 are examples of rotation around the y-axis, but similar results are obtained for rotation around the x-axis.

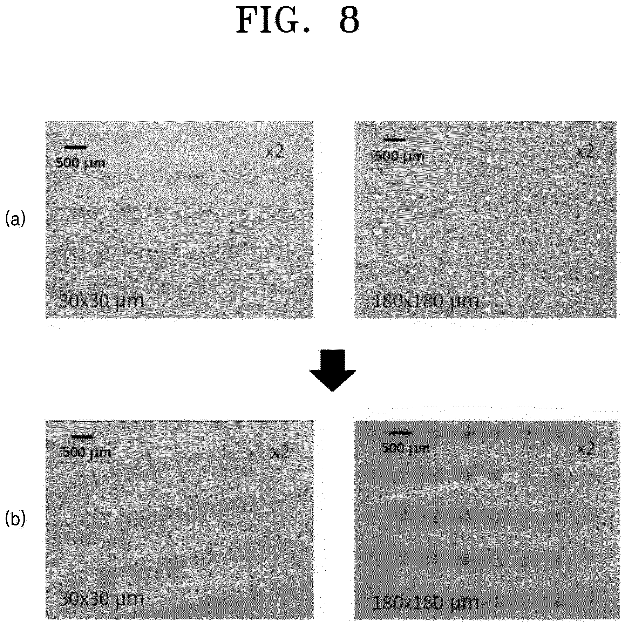

FIG. 8 includes microscopic images of submicron fluidic channels fabricated using a method of fabricating submicron fluidic channels, according to an embodiment of the present invention.

(A) of FIG. 8 shows a printed object including micropores before being deformed. When the printed object is applied with heat and pressure and then held at room temperature for a certain period of time while maintaining the pressure, the result shown in (b) of FIG. 8 is obtained. Because no pores are observed at the µm scale in (b) of FIG. 8, it is shown that channels of tens of µm may be deformed into nanometer-sized channels.

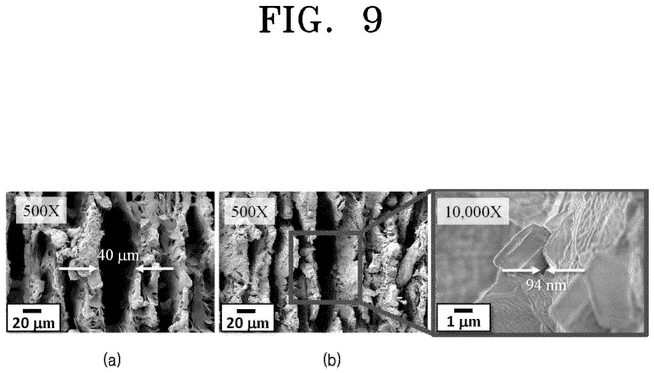

FIG. 9 includes SEM images of the submicron fluidic channels of FIG. 8 before deformation (a) and after deformation (b). FIG. 9 shows that 40 µm channels in (a), before deformation, are deformed into 94 nm channels in (b).

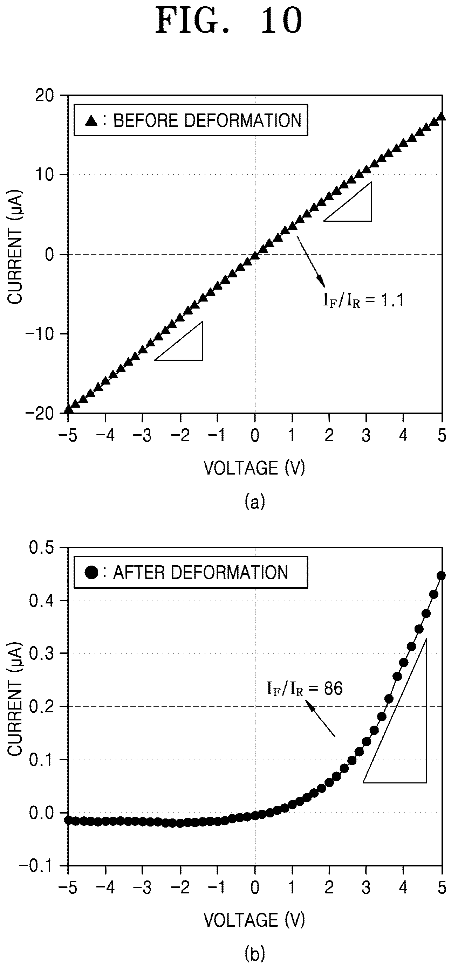

FIG. 10 shows test results for determining whether submicron fluidic channels fabricated according to an embodiment of the present invention are formed.

The formation of nanochannels may be verified through performance evaluation of a nanofluidic diode. The nanofluidic diode is a key test method for determining whether nanostructures are formed, based on a significant difference between forward and reverse currents due to the asymmetry of the surrounding environment when current flows through the nanostructures.

FIG. 10 includes graphs of the submicron fluidic channels before deformation (a) and after deformation (b). As seen in (b) of FIG. 10, the resistance in the "forward" direction is 11 MΩ, while the resistance in the "reverse" direction is 973 MΩ, showing a rectification ratio of 86. This verifies that the nanostructures are well formed.

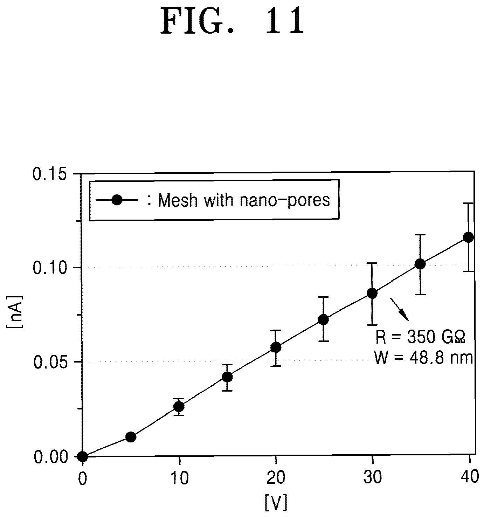

FIG. 11 is a graph showing a pore size calculated by measuring the electrical resistance of nanopores of submicron fluidic channels fabricated according to an embodiment of the present invention.

Referring to FIG. 11, it is shown that, after deformation, a pore width W is reduced to a nanoscale size of 48.8 nm. This result is consistent with the post-deformation results shown in FIGS. 8 and 9.

As described above, according to the present invention, by adjusting the original print orientation of the 3D printer, higher resolution may be obtained, and the typical resolution of hundreds of micrometers may be stably reduced to tens of micrometers. When heat and pressure are subsequently applied to the printed object, deformation may occur to form submicron fluidic channels.

While the present invention has been particularly shown and described with reference to embodiments thereof, it will be understood by one of ordinary skill in the art that various changes in form and details may be made therein without departing from the scope of the present invention as defined by the following claims.

## Claims

1. A method of fabricating submicron fluidic channels using a three-dimensional (3D) printer, the method comprising:
(a) creating a 3D model comprising micropores;
(b) printing the 3D model by adjusting a print orientation of a minimum diameter of the micropores to align with a layer thickness direction of the 3D printer; and
(c) forming submicron-sized fluidic channels by applying predetermined heat and pressure to the printed object,
wherein step (c) comprises forming submicron-sized fluidic channels by bringing two points, which form a minimum diameter of pores implemented in the printed object, into close contact with each other.

2. The method of claim 1, wherein step (c) comprises bringing the two points into close contact by applying the pressure in directions facing each other toward the two points.

3. The method of claim 1, wherein the 3D printer has an xy resolution greater than the layer thickness.

4. The method of claim 3, wherein the minimum diameter of pores implemented in the printed object is smaller than the xy resolution.

5. The method of claim 1, wherein the layer thickness corresponds to a z-axis diameter of pores implemented in the printed object.

6. The method of claim 1, wherein the printed object is held at room temperature for a predetermined period of time while the pressure is being applied, after step (c).

7. The method of claim 1, wherein step (b) comprises rotating the 3D model around a combination of x- and y-axes.

8. The method of claim 7, wherein the 3D model is rotated 90° or less.

9. The method of claim 7, wherein, in step (b), when the 3D model is rotated 90° around the x-axis, a minimum y-axis diameter of the micropores corresponds to the layer thickness.

10. The method of claim 7, wherein, in step (b), when the 3D model is rotated 90° around the y-axis, a minimum x-axis diameter of the micropores corresponds to the layer thickness.

11. The method of claim 1, wherein the 3D printer uses multijet printing (MJP).

12. Submicron fluidic channels fabricated according to any one of claims 1 to 11, comprising submicron-sized fluidic channels, and satisfying a maximum diameter less than 1 µm.

13. The submicron fluidic channels of claim 12, wherein the submicron fluidic channels satisfy a minimum diameter of 1 nm or more.
